Europäisches Patentamt

European Patent Office

Office européen des brevets

(19)

(11) **EP 0 707 201 B1**

(12) **FASCICULE DE BREVET EUROPEEN**

(45) Date de publication et mention
de la délivrance du brevet:
**13.06.2001 Bulletin 2001/24**

(51) Int Cl.⁷: **G01J 1/42**

(21) Numéro de dépôt: **95402250.5**

(22) Date de dépôt: **09.10.1995**

(54) **Analyseur de faisceaux laser**

Laserstrahlanalysator

Laser beam analyzer

(84) Etats contractants désignés:
**AT BE DE GB IT**

(30) Priorité: **12.10.1994 FR 9412164**

(43) Date de publication de la demande:
**17.04.1996 Bulletin 1996/16**

(73) Titulaire: **COMMISSARIAT A L'ENERGIE
ATOMIQUE**
**75015 Paris Cédex 15 (FR)**

(72) Inventeurs:
• **Alfille, Jean-Pascal**
**F-92140 Clamart (FR)**

• **Raoux, Jean**
**F-78340 Les Clayes Sous Bois (FR)**

(74) Mandataire: **Dubois-Chabert, Guy et al
BREVATOME
3, rue du Docteur Lanceraux
75008 Paris (FR)**

(56) Documents cités:
**EP-A- 0 461 730          FR-A- 2 603 710
US-A- 3 731 106          US-A- 4 260 255**

• **PATENT ABSTRACTS OF JAPAN vol. 12 no. 240
(P-727) [3087] ,8 Juillet 1988 & JP-A-63 033637
(TOSHIBA CORP.) 13 Février 1988,**

**Description**

Domaine technique

La présente invention relève du domaine de l'analyse des faisceaux laser, en particulier des faisceaux laser de puissance.

Au cours des dernières années, les lasers industriels ont vu leurs performances, en matière de puissance émise, considérablement augmenter. Ainsi, les lasers à $CO_2$ ont vu leur puissance doubler en 10 ans (actuellement de l'ordre de 10 kilowatts), les lasers YAG ont vu leur puissance passer de 0,3 kilowatt à 3 kilowatts dans la même période de temps, tandis que la puissance des lasers à excimères a été décuplée, passant de 0,1 kilowatt à 1 kilowatt.

Les applications de ces lasers concernent essentiellement le traitement et la découpe de matériaux. Pour ces différentes opérations, il est primordial d'assurer la reproductibilité du procédé, ce qui implique la connaissance des caractéristiques du faisceau émis, que ce soit directement en sortie de cavité laser ou dans la zone de focalisation du faisceau laser.

La caractérisation d'un faisceau laser est réalisée par un analyseur de faisceaux, qui doit répondre aux conditions suivantes :

-    l'analyseur doit donner la répartition de puissance dans la section du faisceau analysé, que ce faisceau soit focalisé ou pas,
-    il doit avoir une bonne tenue aux hautes densités de puissance (avec un faisceau focalisé on atteint des densités de puissance de l'ordre de $10^6$ watts/$cm^2$),
-    le dispositif doit pouvoir être facilement installé en série dans une ligne optique d'un faisceau laser de puissance, sans perturber la propagation du faisceau (ce qui veut dire des pertes de puissance inférieures à 1%, et peu de distorsions du faisceau après passage dans l'analyseur),
-    il doit pouvoir analyser une section du faisceau dans un temps inférieur à la seconde.

Afin de satisfaire à ces critères, l'analyse du faisceau ne peut être effectuée en l'interceptant totalement. En effet, les puissances transportées sont importantes. Ainsi, dans la plupart des analyseurs existants, c'est une fraction du faisceau qui est prélevée pour l'analyse.

Art antérieur

On connaît des analyseurs de faisceaux laser de puissance qui sont conçus suivant l'un ou l'autre des deux principes exposés ci-après.

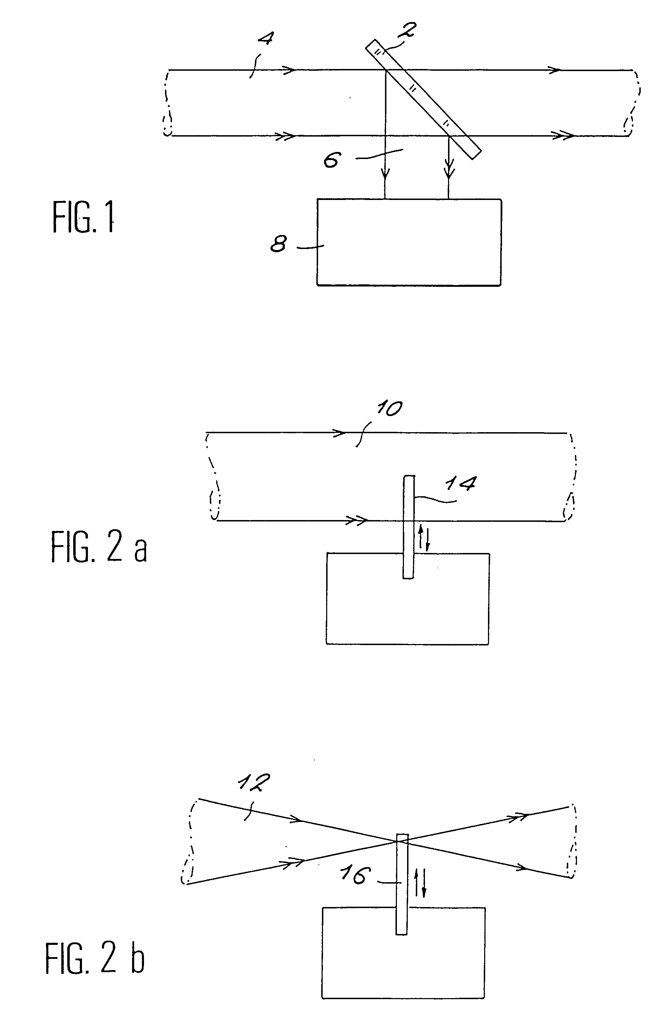

Selon un premier principe, illustré sur la figure 1, on prélève au moyen d'une lame 2 inclinée à 45° dans le faisceau 4 une faible fraction (environ 1%) de la totalité du faisceau à analyser. Puis cette fraction 6 de faisceau pénètre dans un dispositif 8 d'analyse de faisceaux laser. Cette méthode présente deux inconvénients :

-    il est nécessaire d'introduire une lame de prélèvement dans le faisceau laser de puissance, et il en découle des problèmes de tenue en puissance de cette lame et de son vieillissement,
-    il est difficilement possible d'analyser un faisceau focalisé en sortie d'une tête de focalisation.

Selon un deuxième principe, illustré sur les figures 2a et 2b, on prélève directement dans le faisceau de puissance 10, 12 une fraction de ce dernier qu'on analyse. C'est un élément mobile 14, 16 de l'analyseur qui coupe le faisceau laser focalisé (figure 2b) ou non focalisé (figure 2a), et qui renvoie la fraction de faisceau prélevée sur un ou plusieurs détecteurs.

L'avantage de cette méthode de prélèvement est une mise en place aisée du dispositif d'analyse, de la sortie du faisceau de la source laser jusqu'à l'extrémité de la ligne optique dans la zone de focalisation du faisceau (il n'y a pas d'interposition de lame de prélèvement). Par contre, l'élément mobile doit tenir des densités de puissance élevées, jusqu'à $10^6$ à $10^7$ watts/$cm^2$.

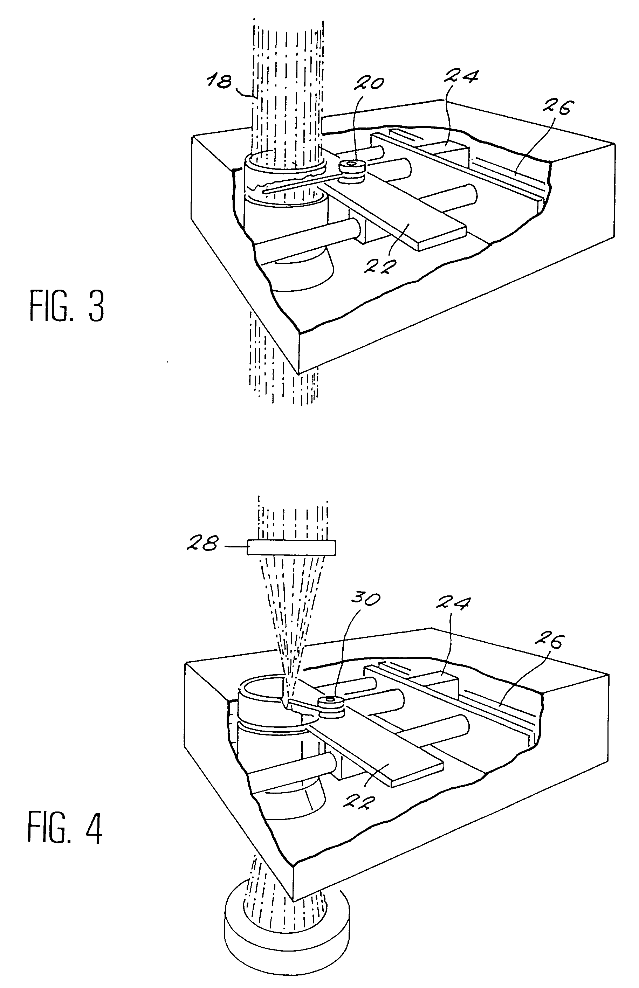

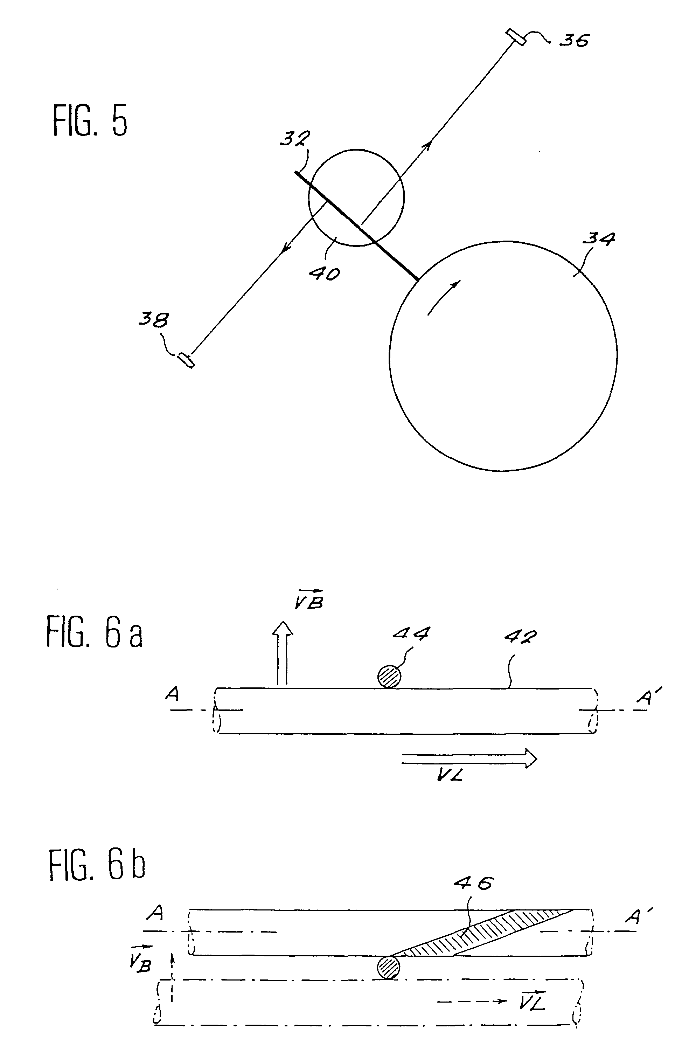

Un exemple de dispositif d'analyse de faisceaux laser de puissance est illustré sur les figures 3 et 4, respectivement pour un faisceau non focalisé et un faisceau focalisé. Sur la figure 3, la référence 18 désigne un faisceau laser de grande puissance, non focalisé, la référence 20 un support tournant avec une aiguille pour mesure de faisceaux non focalisés, ledit support étant monté sur un chariot d'avance 22, commandé par un dispositif d'entraînement 24 piloté par une commande électronique 26. Sur la figure 4, la référence 28 désigne une optique de focalisation, et la référence 30 un support tournant avec une aiguille pour mesure de faisceaux focalisés. Les références 22, 24 et 26 désignent les mêmes éléments que sur la figure 3. Dans les deux cas, l'aiguille présente une cavité longitudinale ainsi qu'un trou coaxial au faisceau laser, percé sur le côté de l'aiguille faisant face au faisceau et communiquant avec la cavité. La radiation du faisceau entre par le trou percé et est guidée dans l'aiguille vers un détecteur localisé sur l'axe du support tournant. Le mouvement de l'aiguille est contrôlé par le mouvement d'avance du chariot 22. Les signaux du détecteur sont ensuite digitalisés et mémorisés temporairement dans un processeur, puis transférés à un micro-ordinateur pour traitement ultérieur. Enfin, le diamètre du trou latéral dans l'aiguille peut être modifié en fonction de la puissance du faisceau laser incident. Ce type de dispositif, s'il convient pour des faisceaux moyennement focalisés, ne convient pas pour des faisceaux très focalisés.

Un autre dispositif de l'art antérieur, connu sous le nom de LBA (Laser Beam Analyser) est illustré sur la figure 5. Une aiguille rotative 32, montée sur un support 34, réfléchit, par exemple dans deux directions perpendiculaires, un faisceau laser sur deux détecteurs 36, 38. La référence 40 désigne sur la figure 5 la section du faisceau laser. Ce type de dispositif ne permet pas d'analyser des faisceaux moyennement focalisés (diamètre de la tache focale supérieur à lmm) et encore moins des faisceaux très focalisés (diamètre de la tache focale inférieur à 1mm). Un dispositif similaire est décrit dans le brevet DD-A-301 560.

Un autre dispositif de l'art antérieur, décrit dans le document FR-A-2 603 710, révèle un analyseur de faisceaux comportant des fils polis constituant chacun une tige réflectrice. Ces fils sont répartis avec un angle quasi droit sur un disque porte-fils qui constitue un support de tige et qui tourne autour d'un axe horizontal. Les fils sont donc entraînés dans un mouvement de rotation autour de cet axe et chaque passage d'un fil dans le faisceau intercepte une partie de ce dernier. L'élément de prélèvement, dans ce dispositif, est de très petite dimension par rapport à la section du faisceau laser, ce qui peut entraîner une altération de l'élément lorsque le faisceau est fortement localisé.

Par conséquent, le problème majeur de l'ensemble des dispositifs présentés précédemment est celui de l'analyse de faisceaux très focalisés, pour lesquels les densités de puissance sont très élevées (supérieures à $10^6$watts/cm$^2$) sur l'élément de prélèvement. Dans certains cas d'analyse de faisceaux fortement focalisés avec des puissances élevées (supérieures à 5 kilowatts), on a même pu noter une altération, voire une destruction de cet élément de prélèvement.

Exposé de l'invention

La présente invention cherche à résoudre ces problèmes. Plus spécifiquement, elle a pour objet un dispositif de prélèvement d'un faisceau laser, du type suivant lequel on balaye une section du faisceau par un élément de prélèvement, ayant une forme allongée suivant une direction principale, comportant des moyens pour mettre l'élément de prélèvement en mouvement, caractérisé en ce que ces moyens permettent une translation de l'élément de prélèvement suivant une direction perpendiculaire à la direction principale (AA'), et une autre translation de l'élément de prélèvement suivant la direction principale (AA').

Ceci permet, lorsque le faisceau analysé est un faisceau focalisé ou très focalisé, d'augmenter la surface de l'élément irradié par ledit faisceau. Dans un analyseur classique, l'élément de prélèvement est soumis à une densité d'énergie De lors de son passage dans le faisceau focalisé, donnée par la formule :

$$e = \frac{P}{S} \cdot \tau$$

où P représente la puissance dans le faisceau focalisé, S la surface de l'élément de prélèvement irradiée par le faisceau focalisé ($S \simeq$ diamètre de l'élément de prélèvement x diamètre du faisceau) et $\tau$ le temps de passage de l'aiguille dans le faisceau. Le fait de pouvoir combiner un mouvement suivant la direction principale de l'élément de forme allongée avec le mouvement de balayage usuel de cet élément permet d'augmenter la surface S qui est exposée au faisceau laser. L'emploi de deux mouvements de translation permet de simplifier l'acquisition des signaux et surtout leur traitement.

En outre, on peut interposer ce type d'élément de prélèvement dans une ligne optique d'un laser de puissance sans aucune modification de la ligne optique et sans aucune perturbation du faisceau après passage de celui-ci au niveau de l'élément de prélèvement. On peut en outre aisément analyser des faisceaux non focalisés, des faisceaux focalisés et des faisceaux très focalisés.

Selon un autre mode de réalisation, l'élément de prélèvement est un fil.

Ce fil peut s'appuyer sur les gorges de deux poulies en mouvement de rotation excentrique autour de deux axes parallèles, des moyens étant prévus pour entraîner lesdites poulies en mouvement de rotation autour de ces axes.

L'invention a également pour objet un appareil d'analyse de faisceaux laser comportant un dispositif de prélèvement tel que décrit ci-dessus, et un système d'analyse du faisceau réfléchi par le dispositif de prélèvement.

Selon un mode particulier de réalisation, le système d'analyse du faisceau réfléchi comprend un diaphragme en forme de fente, et des moyens de déplacement du diaphragme selon un mouvement de translation suivant une direction essentiellement perpendiculaire à la direction suivant laquelle l'élément de prélèvement réfléchit la lumière du faisceau laser.

Ces moyens de déplacement peuvent comprendre un moteur pas à pas.

En outre, ils peuvent également comprendre une lentille de focalisation du faisceau diaphragmé, qui peut être solidaire du diaphragme en translation.

Brève description des figures

De toute façon, les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :

-    la figure 1 illustre un principe de fonctionnement d'un dispositif selon l'art antérieur,
-    les figures 2a et 2b illustrent un autre principe de fonctionnement de dispositifs selon l'art antérieur,
-    les figures 3 et 4 illustrent un appareil selon l'art antérieur,
-    la figure 5 illustre un autre appareil selon l'art antérieur,

- les figures 6a et 6b illustrent le principe de fonctionnement d'un appareil selon l'invention,
- les figures 7a à 7c illustrent un dispositif de mise en oeuvre de l'invention,
- la figure 8 est un appareil d'analyse incorporant un dispositif de prélèvement d'un faisceau laser, et un ensemble d'analyse,
- la figure 9 représente, vu de dessus, un diaphragme pour le prélèvement d'une bande étroite du faisceau réfléchi,
- la figure 10 est un organigramme pour le fonctionnement d'un appareil selon l'invention.

Description détaillée de modes de réalisation

Le principe selon lequel fonctionne un dispositif selon l'invention est illustré sur les figures 6a et 6b. Un élément de prélèvement 42 présente une forme allongée suivant une direction principale AA'. Des moyens, non représentés sur les figures 6a et 6b permettent de mettre cet élément 42 en mouvement, de telle manière qu'il présente, au cours du mouvement, une composante de vitesse $V_b$ suivant une direction perpendiculaire à la direction AA' et une composante de vitesse $V_1$ suivant la direction AA'. Sur les deux figures 6a, 6b, la référence 44 désigne une section d'un faisceau laser focalisé. La figure 6a représente la position relative du faisceau laser et de l'élément de prélèvement avant passage de ce dernier dans la tache focale du laser. La figure 6b représente leur position relative après passage de l'élément de prélèvement dans la tache focale. La surface hachurée 46 désigne la surface de l'élément 42 qui est irradiée par le faisceau laser lors de son passage devant la tache focale.

En reprenant les notations déjà données dans l'introduction de la présente demande, on aura :

$$D_e = \frac{P}{S(1 + k)} \; \tau$$

où k représente le rapport de vitesses $V_1/V_b$. On voit que pour k très grand devant 1 (par exemple $V_1 \approx 5V_b$), cette relation devient :

$$D_e \cong \frac{P}{S \cdot k} \tau$$

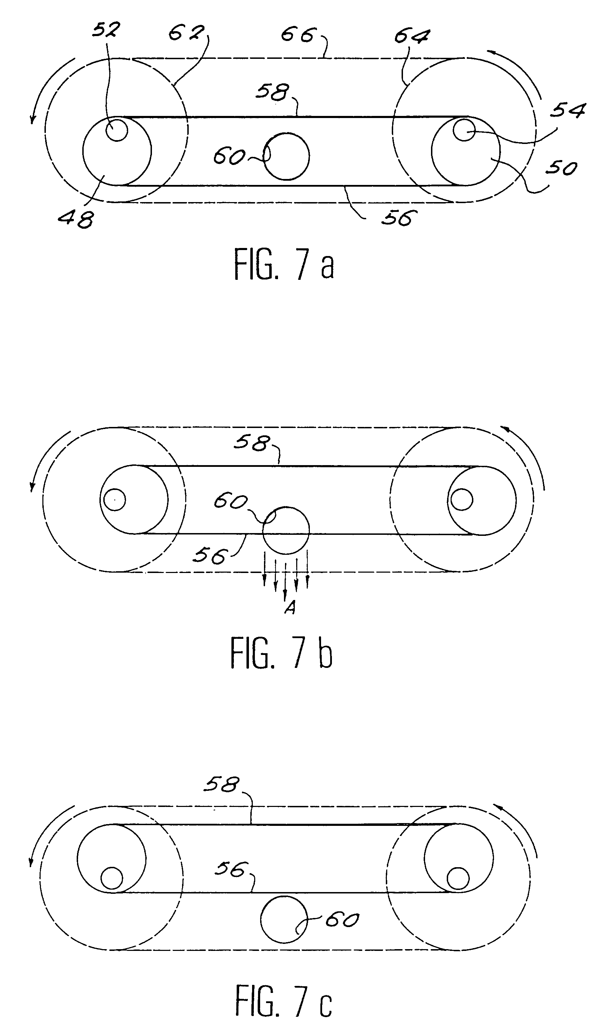

Ainsi, on diminue la densité d'énergie déposée sur l'élément de prélèvement en augmentant la surface de cet élément qui est balayée par le faisceau focalisé.
L'élément de prélèvement peut être constitué par un fil métallique.
Dans ce dernier cas, un dispositif pour entraîner le fil peut être celui illustré sur les figures 7a à 7c. Il s'agit, plus précisément, d'un ensemble de deux poulies 48, 50 excentrées en rotation autour de deux axes 52 et 54. Le fil s'appuie par exemple sur une gorge située à la périphérie de chacune des poulies 48, 50. Il forme donc deux brins, un brin inférieur 56 et un brin supérieur 58, la référence 60 désignant une section d'un faisceau laser focalisé. Sur la figure 7a, dans la position "basse" du dispositif, le brin inférieur 56 passe sous le faisceau laser tandis que le brin supérieur 58 passe au-dessus de ce faisceau. Des moyens sont prévus pour entraîner les deux poulies 48, 50 en rotation autour de leurs axes excentrés 52, 54. Du fait de cette rotation, les deux brins du fil sont entraînés dans un mouvement composé d'une translation parallèlement à la direction du fil et d'une translation perpendiculaire à la direction du fil. La figure 7b illustre la position relative des deux brins du fil et de la section 60 du faisceau laser focalisé, lorsque les deux poulies 48, 50 ont effectué un quart de tour. Le brin inférieur 56 du fil traverse le faisceau 60 en réfléchissant une fraction de ce faisceau dans une direction désignée par A sur la figure 7b. Un dispositif d'analyse, non représenté sur les figures, permet de recueillir ce faisceau réfléchi et de l'analyser. Le fil s'étant déplacé longitudinalement au cours de la rotation des poulies, la densité d'énergie du faisceau laser est répartie sur une longueur plus grande du fil que si ce dernier ne subissait qu'un mouvement de translation de bas en haut. Après que les poulies aient effectué un demi-tour, la position relative des brins du fil et du faisceau laser est celle illustrée sur la figure 7C. Dans ce cas, le brin inférieur du fil est sorti du faisceau 60, et est arrivé à l'extrémité de son mouvement de translation vers le haut, tout en poursuivant un mouvement de translation de droite à gauche.
Un moyen pour entraîner les poulies 48, 50 en rotation est représenté en pointillé sur les figures 7a à 7c. Il s'agit de deux poulies d'entraînement 62, 64 en rotation autour des deux axes 52, 54 et autour desquelles circule une courroie d'entraînement 66. Chaque poulie d'entraînement est solidaire d'une poulie excentrée. Ainsi, si l'une des poulies d'entraînement est entraînée en rotation par un moteur, par exemple un moteur électrique, non représenté sur la figure, l'autre poulie d'entraînement est entraînée en rotation simultanément et à la même vitesse, l'ensemble entraînant les deux poulies 48, 50 en rotation autour de leur axe excentré, ce qui conduit au mouvement du fil qui a été décrit ci-dessus.
Selon un exemple de réalisation, pour un diamètre des poulies excentrées de 300mm, un excentrement de 50mm, une vitesse de rotation des poulies de 3000 tours/minute (50 tours/s), on obtient une vitesse transversale moyenne de prélèvement $V_b$ pour le fil : $V_b$=10m/s, et des vitesses de défilement linéaire du fil qui varient entre 30m/s ($V_{1min}$) et 60m/s ($V_{1max}$).

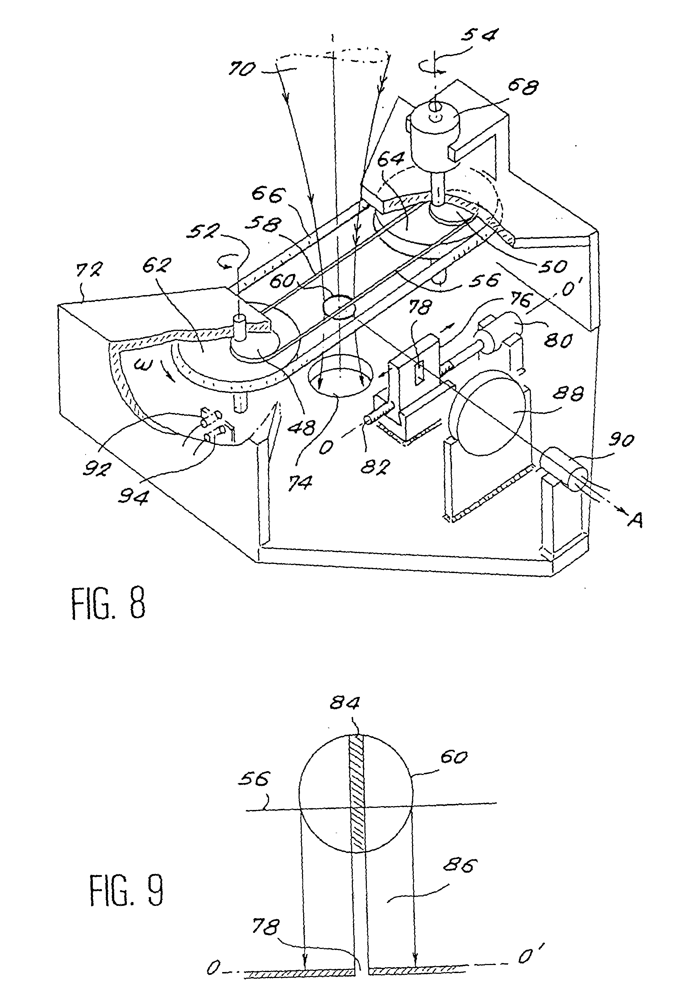

La figure 8 représente un appareil d'analyse incorporant un dispositif de prélèvement tel que décrit ci-dessus et un ensemble d'analyse du faisceau réfléchi par le dispositif de prélèvement. Sur cette figure, on retrouve en perspective le dispositif de prélèvement avec les poulies excentrées 48, 50, et les poulies d'entraînement 62, 64, leur courroie d'entraînement 66, le fil de prélèvement 56, 58 et un moteur d'entraînement 68 des poulies d'entraînement. Le faisceau laser est désigné d'une façon générale par la référence 70 et la section de ce faisceau qui est balayée par le fil est désignée plus spécifiquement par la référence 60. L'ensemble est monté dans un châssis 72, dont le fond est percé par un trou 74 qui laisse échapper le faisceau laser 70.

Lors du passage du fil 56 dans la zone de focalisation du faisceau, une faible fraction de la puissance laser va être réfléchie dans la direction A d'analyse.

Un dispositif d'analyse, pour analyser le faisceau réfléchi dans la direction A, peut comprendre un diaphragme 76, dans lequel est défini une fente 78 et des moyens (par exemple un moteur électrique qui entraîne une vis sans fin 82) permettant d'entraîner ce diaphragme 76 en translation suivant une direction sensiblement perpendiculaire à la direction A suivant laquelle une partie du faisceau est réfléchie. Cette direction est repérée sur la figure 8 par l'axe OO' Comme on peut le voir plus en détail sur la figure 9, où des références identiques à celles de la figure 8 désignent des éléments identiques, le diaphragme 76 et la fente 78 étant vus de dessus, l'usage de la fente permet d'analyser, pour une position donnée, la répartition de puissance dans une bande étroite 84 du faisceau. Une partie 86 de la lumière réfléchie par le fil en direction du diaphragme est arrêtée par ce diaphragme. Lorsqu'on déplace le diaphragme à l'aide du moteur pas à pas 80 le long de l'axe OO', on peut sélectionner successivement différentes bandes dans la section du faisceau. Avec un seul passage du fil dans cette section, on peut réfléchir suffisamment de lumière pour pouvoir analyser une bande entière. L'appareil d'analyse peut également comprendre une lentille 88, pour la focalisation du faisceau diaphragmé, ainsi qu'un détecteur 90 adapté à la longueur d'onde du laser. La lentille ainsi que le détecteur sont représentés fixes sur la figure 8. Selon un autre mode de réalisation, on peut solidariser ces éléments au diaphragme 76, mobile en translation suivant OO'.

D'autre part, on peut prévoir deux détecteurs 92, 94 disposés à proximité de l'un des axes de rotation des poulies d'entraînement, comme illustré sur la figure 8, l'un des deux détecteurs 94 fournissant un signal de début d'analyse, par exemple pour une position angulaire donnée des poulies 48, 50, correspondant à la figure 7a, l'autre détecteur 92 fournissant un signal de fin d'analyse pour une seconde position angulaire des poulies 48, 50, correspondant à la figure 7c. De plus, ce second signal 92 déclenche le déplacement du diaphragme 76 pour l'analyse d'une nouvelle bande 84 du faisceau. Chacun de ces détecteurs peut être par exemple du type détecteur optique à réflexion. Les signaux qu'ils délivrent peuvent être envoyés à un microprocesseur qui commande le déclenchement du moteur 80 ainsi que des moyens d'acquisition de mémorisation et de traitement des signaux du détecteur 90.

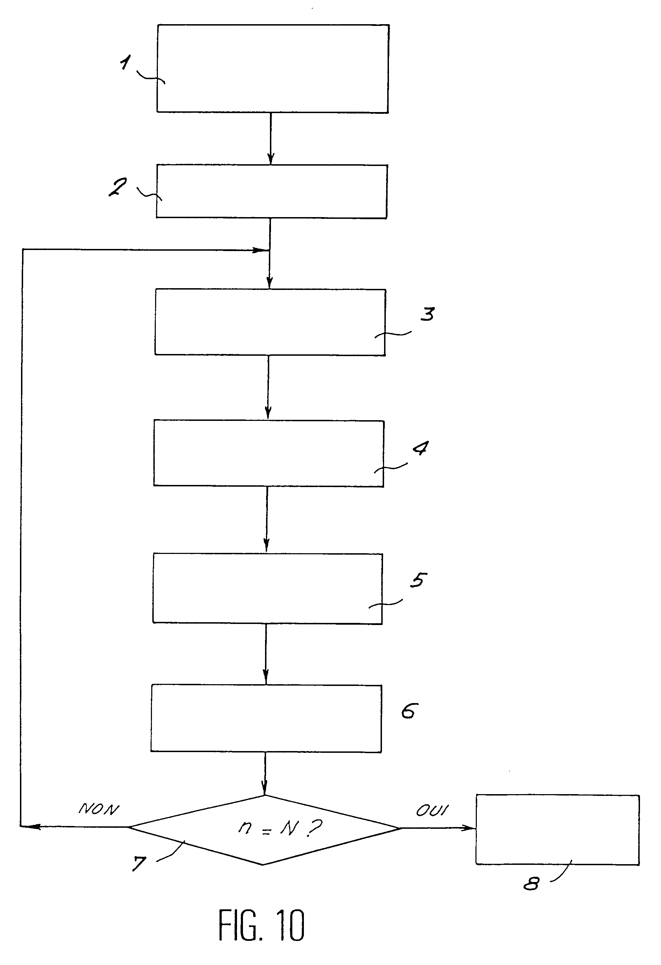

La figure 10 est un organigramme d'une séquence d'acquisition pour obtenir une répartition de la puissance du faisceau laser, l'évolution d'une séquence d'acquisition et la gestion des différentes composantes de l'appareil étant assurées par le microprocesseur.

Dans une première étape 1, le moteur 68 est mis en rotation, à une vitesse déterminée, et on définit le nombre N de déplacements de la fente 76 du diaphragme que l'on souhaite réaliser.

Dans une deuxième étape 2, le détecteur 94 envoie un signal de début d'acquisition au microprocesseur qui déclenche le détecteur 90 et l'acquisition des données correspondant à la première position de la fente 76 (étape 3).

Lorsque les poulies excentrées ont effectué un demi-tour, le détecteur 92 envoie (étape 4) un signal de déplacement de la fente 76 suivant l'axe OO'. Ce déplacement (étape 5) a lieu simultanément à celui des poulies excentrées qui effectuent un demi-tour supplémentaire. A la fin de ce demi-tour supplémentaire, le détecteur 94 envoie un nouveau signal d'acquisition de mesure (étape 6).

Le nombre de tours des poulies 48, 50 correspond au nombre n de déplacements effectués. A chaque tour, un compteur est incrémenté et le nombre de déplacements n comparé au nombre N sélectionné dans l'étape 1 (étape 7).

Si le nombre de déplacements N fixé au départ est atteint, on a effectué l'analyse complète de la section du faisceau ; c'est la fin de la séquence d'acquisition (étape 8). Si, au contraire, ce nombre N n'est pas atteint, l'acquisition est poursuivie (étape 3).

Lorsque l'acquisition est terminée, les données recueillies par le détecteur 90, et mémorisées, peuvent être traitées. On en déduit, par des méthodes connues par ailleurs, la densité d'énergie contenue dans la section 60 du faisceau laser.

Avec ce dispositif, l'opérateur choisit la fenêtre d'analyse en fonction des dimensions du faisceau à analyser. Il peut ainsi analyser un faisceau très focalisé (par exemple de diamètre de l'ordre de 0,5mm) en programmant un petit pas pour le déplacement de la fente diaphragme. Il peut par ailleurs analyser un faisceau large (par exemple de diamètre de l'ordre de plusieurs dizaines de mm) en augmentant le pas du déplacement de la fente diaphragme. enfin, le découplage mécanique entre le dispositif de prélèvement et le dispositif d'analyse permet d'optimiser et de réduire le temps d'analyse.

## Revendications

1. Dispositif de prélèvement d'un faisceau laser, du type suivant lequel on balaye une section de faisceau par un élément de prélèvement (42, 56) ayant une forme allongée suivant une direction principale (AA'), comportant des moyens (62, 64, 66, 68) pour mettre l'élément de prélèvement en mouvement, caractérisé en ce que ces moyens permettent une translation de l'élément de prélèvement suivant une direction perpendiculaire à la direction principale (AA'), et une autre translation de l'élément de prélèvement suivant la direction principale (AA').

2. Dispositif selon la revendication 1, caractérisé en ce que l'élément de prélèvement est un fil (56).

3. Dispositif selon la revendication 2, caractérisé en ce qu'il comporte, en outre, deux poulies (48, 50) à gorge en mouvement de rotation excentrique autour de deux axes (52, 54), le fil (56) s'appuyant sur les gorges de ces poulies, et des moyens (62, 64, 66, 68) pour entraîner les poulies en mouvement de rotation excentrique.

4. Dispositif selon la revendication 3, les moyens (62, 64, 66, 68) pour entraîner les poulies en mouvement de rotation étant constitués par :

   - deux poulies d'entraînement (62, 64), en rotation autour des axes (52, 54),
     une courroie d'entraînement (66) reliant les deux poulies d'entraînement,
     un moyen (68) de mise en mouvement des deux poulies d'entraînement.

5. Appareil d'analyse d'un faisceau laser comportant un dispositif de prélèvement selon l'une quelconque des revendications précédentes, et un système d'analyse (76, 88, 90) du faisceau réfléchi par le dispositif de prélèvement.

6. Appareil d'analyse selon la revendication 5, le système d'analyse du faisceau réfléchi comprenant un diaphragme (76) en forme de fente (78), et des moyens de déplacement du diaphragme selon un mouvement de translation suivant une direction (OO') essentiellement perpendiculaire à la direction (A) suivant laquelle l'élément de prélèvement (56) réfléchit la lumière.

7. Appareil selon la revendication 6, les moyens de déplacement du diaphragme comportant un moteur pas à pas (80).

8. Appareil selon l'une des revendications 6 et 7, comportant, en outre, une lentille de focalisation (88) du faisceau diaphragmé.

9. Appareil selon l'une des revendications 6 à 8, comprenant, en outre, un système de détection (90) du faisceau réfléchi adapté à la longueur d'onde du laser.

10. Appareil selon l'une des revendications 8 et 9, la lentille (88) et le système de détection (90) étant solidaires du diaphragme (76) en translation.

**Patentansprüche**

1. Laserstrahlentnahme-Vorrichtung des Typs, bei dem ein Strahlquerschnitt mit einem Entnahmeelement (42, 56) abtastet wird, das eine in einer Hauptrichtung (AA') gestreckte Form aufweist, und der Einrichtungen (62, 64, 66, 68) umfasst, um das Entnahmeelement in Bewegung zu versetzen, **dadurch gekennzeichnet,** dass diese Einrichtungen eine Parallelverschiebung des Entnahmeelements in einer zu der Hauptrichtung (AA') senkrechten Richtung und eine weitere Parallelverschiebung des Entnahmeelements in der Hauptrichtung (AA') ermöglichen.

2. Vorrichtung nach Anspruch 1, dadurch gekennzeichnet, dass das Entnahmeelement ein Draht ist.

3. Vorrichtung nach Anspruch 2, dadurch gekennzeichnet, dass es außerdem zwei Rillenscheiben (48, 50) umfasst, die sich exzentrisch um zwei Achsen (52, 54) drehen, wobei sich der Draht (56) in den Rillen dieser Scheiben abstützt, sowie Einrichtungen (62, 64, 66, 68), um die Scheiben in eine exzentrische Drehbewegung zu versetzen.

4. Vorrichtung nach Anspruch 3, wobei die Einrichtungen (62, 64, 66, 68), die dazu vorgesehen sind, die Scheiben in eine Drehbewegung zu versetzen, gebildet werden durch:

   - zwei um die Achsen (52, 54) drehbare Antriebsscheiben (62, 64),
   - einen die beiden Antriebsscheiben verbindenden Riemen (66),
   - eine Einrichtung (68), um die beiden Antriebscheiben in Bewegung zu versetzen.

5. Analysegerät eines Laserstrahls mit einer Entnahmevorrichtung nach einem der vorangehenden Ansprüche und einem Analysesystem (76, 88, 90) des durch die Entnahmevorrichtung reflektierten Strahls.

6. Analysegerät nach Anspruch 5, wobei das Analysesystem des reflektierten Strahls eine Blende (76) in Form eines Schlitzes (78) und Einrichtungen zur Parallelverschiebung der Blende in einer Richtung (OO') umfasst, die im Wesentlichen senkrecht zu der Richtung (A) ist, in der das Entnahmeelement (56) das Licht reflektiert.

7. Gerät nach Anspruch 6, wobei die Verschiebungseinrichtungen der Blende einen Schrittmotor (80) umfassen.

8. Gerät nach einem der Ansprüche 6 und 7, das außerdem eine Fokussierlinse (88) des aus der Blende austretenden Strahls umfasst.

9. Gerät nach einem der Ansprüche 6 bis 8, das außerdem ein Detektionssystem (90) des reflektierten Strahls umfasst, das an die Wellenlänge des Lasers angepasst ist.

10. Gerät nach einem der Ansprüche 8 und 9, wobei die Linse (88) des Detektionssystems (90) bei der Parallelverschiebung mit der Blende (76) fest bzw. starr verbunden ist.

**Claims**

1. Device for sampling a laser beam of the type in which scanning takes place of a section of the beam by means of a sampling element (42, 56) having an elongated shape in a main direction (AA'), incorporating means (62, 64, 66, 68) for moving the sampling element, characterized in that said means permit a translation of the sampling element in a direction perpendicular to the main direction (AA') and another translation of the sampling element in the main direction (AA').

2. Device according to claim 1, characterized in that the sampling element is a wire (56).

3. Device according to claim 2, characterized in that it also incorporates two grooved pulleys (48, 50) performing an eccentric rotary movement about two spindles (52, 54), the wire (56) being supported on the grooves of said pulleys, and means (62, 64, 66, 68) for giving the pulleys an eccentric rotary movement.

4. Device according to claim 3, characterized in that the means for giving the pulleys an eccentric rotary movement comprise two driving pulleys (62, 64) rotating about spindles (52, 54), a driving belt (66) linking the two driving pulleys and a means (68) for moving the two driving pulleys.

5. Apparatus for analyzing a laser beam incorporating a sampling device according to any one of the preceding claims, and a system (76, 88, 90) for analyzing the beam reflected by the sampling device.

6. Analysis apparatus according to claim 5, the reflected beam analysis system incorporating a diaphragm (76) in the form of a slit (78), as well as means for the displacement of the diaphragm in a translatory movement in a direction (OO') essentially perpendicular to the direction (A) along which the sampling element (56) reflects the light.

7. Apparatus according to claim 6, the diaphragm displacement means comprising a stepping motor (80).

8. Apparatus according to one of the claims 6 and 7, also comprising a lens (88) for focussing the stopped down beam.

9. Apparatus according to one of the claims 6 to 8, also comprising a system (90) for detecting the reflected beam adapted to the wavelength of the laser.

10. Apparatus according to claim 8 or 9, the lens (88) and detection system (90) being integral in translation with the diaphragm (76).

FIG. 1

**4**

**2**

**6**

**8**

FIG. 2 a

**10**

**14**

FIG. 2 b

**12**

**16**

FIG. 3

FIG. 4

FIG. 5

36

32

40

38

34

FIG. 6 a

$\vec{VB}$

44

42

A

A'

$VL$

FIG. 6 b

46

A

A'

$\vec{V_B}$

$\vec{VL}$

FIG. 7 a

FIG. 7 b

FIG. 7 c

FIG. 8

FIG. 9

FIG. 10